(19) Europäisches Patentamt

European Patent Office

Office européen des brevets

(11) EP 0 791 633 A2

## (12) EUROPÄISCHE PATENTANMELDUNG

(43) Veröffentlichungstag:
27.08.1997 Patentblatt 1997/35

(51) Int. Cl.⁶: $C08L\ 67/00$, $C08J\ 5/18$, $H01G\ 4/18$

(21) Anmeldenummer: 97102264.5

(22) Anmeldetag: 13.02.1997

(84) Benannte Vertragsstaaten:
DE FR GB IT LU NL

(30) Priorität: 26.02.1996 DE 19606956

(71) Anmelder: Hoechst Diafoil GmbH
65023 Wiesbaden (DE)

(72) Erfinder:
- Kurz, Rainer
  65232 Taunusstein 2 (DE)

- Peiffer, Herbert
  55126 Mainz (DE)
- Bursch, Annegrete
  65385 Rüdesheim (DE)

(74) Vertreter: Schweitzer, Klaus, Dr. et al
c/o Hoechst Aktiengesellschaft
Patent- und Lizenzabteilung
Standort Kalle-Albert
65174 Wiesbaden (DE)

### (54) Polyesterzusammensetzung für Kondensatorfolie

(57) Die Erfindung betrifft die Herstellung und Verwendung einer biaxial orientierten Polyesterfolie mit einer Rauhigkeit auf mindestens einer Folienoberfläche von $R_z$ größer als 1,0 µm, einer elektrischen Duchschlagsfestigkeit (AC) von größer als 220 kV/mm und einem migrierenden Anteil in der Folie von kleiner als 18 µS/cm.

EP 0 791 633 A2

**Beschreibung**

Die vorliegende Erfindung betrifft rauhe biaxial orientierte Polyesterfolien, die feinverteilte, anorganische und/oder organische Partikel enthalten, gute dielektrische Eigenschaffen aufweisen und deshalb für die Herstellung von Kondensatoren sehr gut geeignet sind.

Die Erfindung bezieht sich insbesondere auf Polyesterfolien, die für die Herstellung von mit Öl imprägnierten Kondensatoren geeignet sind. Mit Öl imprägnierte Kondensatoren werden bei der Anwendung von hohen Spannungen, wie sie bei Leistungskondensatoren verlangt werden, eingesetzt. Die hierfür verwendeten Folien haben eine im Vergleich zu denjenigen, die z. B. in der Bauteilelektronik verwendet werden, größere Foliendicke. Der Dickenbereich von Folien für die Herstellung von ölimprägnierten Kondensatoren liegt gewöhnlich zwischen 2,5 $\mu$m und 30 $\mu$m. Für die genannten Anwendungen können die Folien sowohl metallisiert sein als auch als Film-Foil-Laminat vorliegen.

Ölimprägnierte Kondensatoren weisen - gegenüber nicht mit Öl imprägnierten Kondensatoren - im allgemeinen folgende Vorteile auf

- die Kapazität des Kondensators erhöht sich durch die höhere Dielektrizitätskonstante $\varepsilon$ des Öles im Vergleich zu Luft oder Vakuum
- die Kapazitätsdrift von mit Öl getränkten Kondensatoren ist geringer, wodurch die Lebensdauer dieser Kondensatoren größer wird und
- die Betriebsspannungen bei ölimprägnierten Kondensatoren sind im allgemeinen höher.

Nach dem Stand der Technik werden für die Herstellung von mit Öl getränkten Kondensatoren aufgrund ihres geringen dielektrischen Verlustfaktors und ihrer hohen dielektrischen Durchschlagsfestigkeit vorteilhaft rauhe biaxial orientierte Polypropylenfolien eingesetzt.

Die Herstellung von ölimprägnierten Kondensatoren mit metallisierten Kunststoffolien oder mit Film-Foil-Laminaten gelingt dann am besten, wenn sich die Folien mit Öl gut benetzen lassen oder die Wickel beziehungsweise Lagenpakete von Schichtkondensatoren gut mit Öl tränkbar sind.

Für eine gute Benetzung der Folie mit Öl und für eine gute Tränkung des Wickels/Kondensators ist es vorteilhaft, wenn die verwendeten Folien eine im Verglich zu Standardfolien (z.B. Verpackungs-, Magnetband- oder Reprofolien) erhöhte Rauhigkeit aufweisen. Im allgemeinen liegt die Rauhigkeit von Standardfolien in der Größenordnung von einigen nm, wohingegen für ölgetränkte Kondensatorfolien Rauhigkeiten in der Größenordnung von einigen $\mu$m verlangt werden. Wird für die Tränkung des Kondensators mit Öl eine Standardfolie mit geringer Rauhigkeit verwendet, so wird die beim Aufwickeln der Folien eingeschleppte Luft nur unvollständig durch das Imprägnieröl entfernt. Die im Kondensator verbleibende Luft begünstigt lokal auftretende Korrosionseffekte durch Überspannungen, wodurch die Durchschlagsfestigkeit und die Kapazität des Kondensators deutlich erniedrigt wird.

Geeignete Rohstoffe für Kondensatoren auf Folienbasis sind insbesondere Polypropylen und Polyester. Tränkbare, biaxial orientierte Polyesterfolien werden insbesondere dann für die Herstellung von Kondensatoren verwendet, wenn eine höhere Wärmestabilität oder eine höhere mechanische Belastbarkeit als bei Einsatz von Polypropylenfolien verlangt wird. Polypropylen hingegen bietet den Vorteil, daß sich hohe Folienrauhigkeiten (im um Bereich) durch geeignete Verfahrenstechnische Maßnahmen einstellen lassen. Hierbei bedient man sich der Tatsache, daß Polypropylen in zwei unterschiedlichen Kristallmodifikationen kristallisieren kann, die, wenn sie in der Folie nebeneinander vorliegen, zu einer erhöhten Rauhigkeit führen. Bei der Herstellung von biaxial orientierten Polyesterfolien ist die Einstellung von zu Polypropylenfolien vergleichbar hohen Rauhigkeiten über verfahrenstechnische Maßnahmen nicht möglich.

Nach dem Stand der Technik wird bei biaxial orientierten Polyesterfolien die für die Wickelung, die Weiterverarbeitung und die Imprägnierung benötigte hohe Folienrauhigkeit über die Zugabe geeigneter anorganischer und/oder organischer Pigmente oder Pigmentsysteme in bestimmten Konzentrationen erzielt.

Ein Dokument, welches diese Verfahrensweise für die Wickelung beziehungsweise für die Weiterverarbeitung von Folien beschreibt, ist die US-A-3 980 611. Nach der Lehre dieser Schrift wird die Folienrauhigkeit und das Folienhandling durch eine Kombination von kleinen (kleiner als 1 $\mu$m), mittleren (1 bis 2,5 $\mu$m) und großen (2,5 bis 10 $\mu$m) Partikeln, wobei bestimmte Relationen von Foliendicke zu Partikelkonzentrationen erfüllt sein müssen, verbessert.

Nach der JP-A 03 197 136 werden Folien, beziehungsweise laminierte Folien mit hohen elektrischen Durchschlagsfestigkeiten und geringen elektrischen Kapazitätsdriften in den entsprechenden Bauelementen durch den Einsatz kleiner Partikel wie kolloidalem Siliciumdioxid hergestellt.

Nach der JP-A 63 141 308 werden 1,4 bis 16 $\mu$m dicke Folien mit guter Verarbeitbarkeit und hohen elektrischen Durchschlagsfestigkeiten durch die Kombination von Silikonharzpartikeln mit anderen inerten Partikeln hergestellt.

Nach der JP-A 03 246 814 können für die Kondensatorfolienanwendung auch vernetzte Polymerpartikel, beziehungsweise nach der JP 88 033 290 auch inerte Partikel mit einem molaren P/Ca-Verhältnis von 0,7 bis 2,5 eingesetzt werden.

Aus der EP-A 0 423 402 ist bekannt, daß hohe Partikelkonzentrationen beziehungsweise große Partikeldurchmesser aufgrund einer relativ schlechten Affinität zwischen Partikel und Polymermatrix vermehrt zu Vakuolen um die Partikel beim Strecken mit den üblichen Streckverhältnissen führen. Entsprechende Vakuolen wirken sich nachteilig auf die mechanischen Folieneigenschaften und die elektrische Durchschlagsfestigkeit der Folien aus. Daneben werden vermehrt Abrisse bei der Folienproduktion verursacht, die zu einer Verschlechterung der Produktivität bei der Folienherstellung führt.

Ein anderer Weg, rauhe Polyesterfolien mit ausgezeichneten Verarbeitungseigenschaften, sehr guter Ölimprägnierbarkeit und sehr guten elektrischen Eigenschaften zu erhalten, beschreibt die JP-A 63 72 531. Dieses Dokument beschreibt die Herstellung rauher ölimprägnierbarer 12 μm dicker Folien durch einen zusätzlichen Beschichtungsschritt, bei dem ein „schwellbare" Silikat aufgebracht wird.

Alle bisher bekannten rauhen Polyesterfolien weisen den Nachteil auf, daß die elektrischen Eigenschaften dieser Folien schlechter sind als die elektrischen Eigenschaften des für ihre Herstellung verwendeten Polyesters. Dies läßt darauf schließen, daß durch die Einarbeitung von Additiven, Partikeln und sonstigen Zusatzstoffen in den Polyesterrohstoff die elektrischen Eigenschaften vermindert werden.

Aufgabe der vorliegenden Erfindung war es daher, rauhe biaxial orientierte Polyesterfolien für die Elektroisolierung und für die Kondensatorherstellung bereitzustellen, die eine Reihe von vorteilhaften Eigenschaften aufweisen und die sich zudem sehr gut verarbeiten lassen. Die Folie soll insbesondere

- wirtschaftlich herstellbar sein
- eine hohe Spannungsfestigkeit aufweisen
- eine Rauhigkeit $R_z$ von >1,0 μm ($R_a$ >0,1 μm) aufweisen
- sich ohne Falten und Verdehnungen verarbeiten lassen
- eine gute Ölimprägnierbarkeit aufweisen und
- gute elektrische Langzeiteigenschaften aufweisen.

Die Aufgabe wird gelöst durch eine biaxial orientierte Polyesterfolie, die dadurch gekennzeichnet ist, daß

- zumindest auf einer Folienoberfläche die Rauhigkeitswerte $R_z$ größer als 1,0 μm beziehungsweise $R_a$ größer als 0,1 μm sind
- die Durchschlagsfestigkeiten AG größer als 220 kV/mm, beziehungsweise DC größer als 500 kV/mm sind und
- der migrierende Anteil, bezogen auf die Masse der zugegebenen Partikel auf ein Polyester-Volumen von 100 cm³, kleiner als 18 μS/cm ist.

Der 'migrierende Anteil' einer Folie ist ein Maß für die Verunreinigung einer Folie. Zu dieser Verunreinigung tragen zu einem erheblichen Teil die in die Folie eingearbeiteten Partikel bei, welche - je nach Art der Herstellung beziehungsweise Aufarbeitung - Stoffe enthalten, die migrieren können. Die migrierfähigen Substanzen in den Partikeln und damit in der Folie haben die Tendenz, mit der Zeit aus der Folie auszutreten, wodurch die elektrischen Eigenschaften der Folie und damit des Kondensators schlechter werden. Insbesondere wird in diesem Fall ein Driften der Kapazität festgestellt, was unerwünscht ist. Der Anteil der migrierfähigen Substanzen in den Partikeln korreliert mit der Leitfähigkeit der Partikel; je reiner die Partikel, desto geringer der Anteil an migrierfähigen Substanzen und desto geringer die elektrische Leitfähigkeit der Partikel. Aus der Leitfähigkeit der Partikel läßt sich bei Kenntnis der Partikelkonzentration die Leitfähigkeit und damit der 'migrierende Anteil', d.h. die Verunreinigung der Polyesterfolie bestimmen.

Die Erfindung betrifft also eine orientierte Polyesterfolie, die eine Rauhigkeit auf mindestens einer Folienoberfläche von $R_z$ größer als 1,0 μm, vorzugsweise größer als 1,1 μm und insbesondere größer als 1,2 μm ($R_a$ größer als 0,1 μm, vorzugsweise größer als 0,12 μm und insbesondere größer als 0,14 μm) aufweist. Hierdurch wird eine gute Tränkbarkeit mit Öl garantiert. Wenn die Oberflächenrauhigkeit der Folie unterhalb der angegebenen Zahlenwerte liegt, eignet sich die Folie wegen ihrer schlechten Tränkbarkeit nicht für die Herstellung von ölimprägnierten Kondensatoren.

Des weiteren ist die elektrische Durchschlagsfestigkeit AC der erfindungsgemäßen Folie größer als 220 kV/mm, vorzugsweise größer als 230 kV/mm und insbesondere größer als 240 kV/mm (DC größer als 500 kV/mm, vorzugsweise größer als 530 kV/mm und insbesondere größer als 560 kV/mm).

Vorzugsweise besitzt die Folie eine Gesamtdicke von größer als 2,5 μm, sie ist insbesondere 2,5 μm bis 30 μm dick, vorzugsweise 4 bis 25 μm.

Der migrierende Anteil der erfindungsgemäßen Folie, bezogen auf die Masse der zugegebenen Partikel auf ein Polyester-Volumen von 100 cm³, ist kleiner als 18 μS/cm, bevorzugt kleiner als 16 μS/cm, insbesondere kleiner als 14 μS/cm.

Die Erfindung bezieht sich daneben auf einen Folienrohstoff auf Basis eines Polyesters, der anorganische und/oder organische Partikel enthält, mit der Maßgabe, daß die Reinheit und Konzentration dieser Partikel so bemessen sind, daß der migrierende Anteil der aus diesem Rohstoff hergestellten Folie, bezogen auf die Masse der zugegebenen Partikel auf ein Polyester-Volumen von 100 cm³, kleiner ist als 18 μS/cm. Ist die Konzentration der eingesetzten Partikel gering, z.B. 2000 ppm, so kann ein Partikel mit relativ hoher Leitfähigkeit (= hohem migrierenden Anteil, geringerer Reinheit) eingesetzt werden, ohne daß der migrierende Anteil der Folie, den erfindungsgemäßen Grenzwerte von

18 μS/cm überschreitet. Die Konzentration der Partikel kann jedoch andererseits nicht beliebig weit reduziert werden, weil dann die Rauhigkeit der Folie unter den erfindungsgemäßen Grenzwert von $R_z$ >1,0 μm fällt. Allgemein hat sich als günstig erwiesen, wenn man Partikel mit einer Leitfähigkeit von < 100 μS/cm einsetzt, bevorzugt <90 μS/cm, besonders bevorzugt <80 μS/cm. Die Partikelkonzentration der anorganischen und/oder organischen Partikel in der Folie liegt bevorzugt bei mehr als 5 000 ppm, besonders bevorzugt bei mehr als 9 000 ppm und insbesondere mehr als 13 000 ppm. Die Angaben beziehen sich dabei auf das kumulative Gewicht von Polymer und Teilchen. Höhere Partikelleitfähigkeiten beziehungsweise geringere Konzentrationen sind möglich, solange der migrierende Anteil der Folie unter 18 μS/cm bleibt.

Die erfindungsgemäß verwendeten Partikel können sowohl anorganische Partikel beispielsweise aus Kaolin, Aluminiumoxid, Siliciumdioxid, amorpher Kieselsäure, pyrogener Kieselsäure, natürlichem und gefälltem Kalziumcarbonat als auch organische Partikel beispielsweise aus Silikonen, Acrylaten oder Epoxidharzverbindungen sein. Solche Partikel sind entweder in der geforderten Reinheit käuflich erhältlich, wie z.B. pyrogene Kieselsäure (®Aerosil, Degussa, Hanau) oder lassen sich durch Waschen und/oder Reinigen von käuflich erhältlichen Produkten gewinnen. Ganz allgemein sind solche Partikel geeignet, bei denen durch eine entsprechende Prozeßführung bei der Herstellung, durch Einsatz entsprechend reiner Ausgangsverbindungen oder durch nachträgliche Wasch- und Reinigungsschritte der Anteil an migrierbaren Stoffen reduziert wird und die Leitfähigkeit der entsprechenden Partikelsuspensionen < 100 μS/cm, bevorzugt <90 μS/cm, insbesondere <80 μS/cm ist. Weitere Maßnahmen zur Reduzierung migrierender Anteile können je nach Art der Verunreinigung sein: Glühen, Tempern, Brennen, Entgasen, Ausfällen beziehungsweise Maskieren von kationischen Molekülen, durch z.B. phosphororganische Verbindungen. Gleichfalls geeignet sind auch Kombinationen aus den o.g. Verfahren.

Von Vorteil ist es, anorganische und/oder organische Partikel mit einem mittleren Teilchendurchmesser größer als 1,5 μm, vorzugsweise größer als 1,8 μm und insbesondere größer als 2,0 μm einzusetzen, damit die gewünschte hohe Rauhigkeit der Folienoberfläche erzielt werden kann.

Die Partikel können sowohl sphärisch als auch nicht sphärisch sein. "Sphärisch" bedeutet, daß die Partikel ein Aspect Ratio von 1 bis 1,2 besitzen. "Aspect Ratio" ist der Quotient aus dem größten und dem kleinsten Partikeldurchmesser. Dieses ist im Idealfall gleich 1. Die Aspect-Ratio-Werte werden an Teilchen in einer fertigen Folie gemessen und beziehen sich dementsprechend nicht auf die Aspect-Ratio-Werte der freien Partikel.

Das Ausmaß der Korngrößenverteilung der Partikel ist nicht kritisch; so können sowohl monodisperse als auch Partikel mit einer entsprechenden Korngrößenverteilung eingesetzt werden. "Monodispers" bedeutet, daß die Partikel eine sehr enge Korngrößenverteilung aufweisen; im Idealfall gar keine Verteilung aufweisen. Im letztgenannten Fall existiert keine mittlere Korngröße mehr, da quasi alle Teilchen den gleichen Durchmesser aufweisen.

Die Partikel können Primärpartikel, das heißt einzelne, nicht agglomerierte Partikel sein, aber auch sekundär agglomerierte Partikel, das heißt zu größeren Einheiten zusammengelagerte Teilchen sein. Im Fall der agglomerierten Partikel bezieht sich der mittlere Teilchendurchmesser auf den mittleren Durchmesser der Agglomerate.

Der Teilchendurchmesser der Partikel und/oder Agglomerate wie auch das Aspect Ratio und die Monodispersität können durch Ausmessen von elektronenmikroskopischen Aufnahmen bei einer Auflösung von 3000 bis 10000 bestimmt werden.

Unter Polyestern werden insbesondere Polyesterrohstoffe verstanden, die zum überwiegenden Teil, d.h. zu mindestens 80 Gew.-%, bevorzugt mindestens 90 Gew.-%, aus einem Polymer ausgewählt aus der Gruppe Polyethylenterephthalat (PET), Polybutylenterephthalat (PBT), Polyethylennaphthalat (PEN), Poly-1,4-dicyclohexandimethylenterephthalat (PCT), Polyethylennaphthalatbibenzoat (PENBB) und Blends dieser Polymere bestehen. Bevorzugt sind Polyesterrohstoffe, die vorzugsweise im wesentlichen aus Ethylenterephthalateinheiten und/oder vorzugsweise bis zu 30 Mol-% aus Comonomereinheiten aufgebaut sind, wobei eine Variation in der Glykol- und/oder der Säurekomponente der Comonomereinheiten möglich ist. Die Herstellung der Polyester kann sowohl nach dem Umesterungsverfahren mit den üblichen Katalysatoren, wie z.B. Zn-,. Ca-, Li- und Mn-Salzen, oder nach dem Direktveresterungsverfahren erfolgen.

Die erfindungsgemäße Folie wird aus einer Mischung des Polyesters mit den Partikeln hergestellt.

Der Polyesterrohstoff kann durch Zugabe der Partikel vor Beginn der Umesterung oder auch nach Beendigung der Umesterung hergestellt werden. Bevorzugt ist die Zugabe der Partikel in Form einer glykolischen Suspension vor Beendigung der Umesterung. Alternativ können die Partikel auch nach der Rohstoffherstellung durch Direktadditivierung, Blenden, Compoundieren oder z.B. über Masterbatche eingearbeitet werden.

Die biaxial orientierten Polyesterfolien können nach bekannten Verfahren, die nicht näher beschrieben werden müssen, aus oben beschriebenem Rohstoff oder in Kombination obigen Rohstoffs mit anderen Rohstoffen oder üblichen Additiven in üblichen Mengen von 0,1 bis maximal 10 Gew.-% mit gleichen oder unterschiedlich ausgebildeten Oberflächen hergestellt werden. Bei Verwendung anderer Rohstoffe und/oder Additive ist darauf zu achten, daß die elektrischen Eigenschaften der hergestellten Folien durch diese Zusätze nicht negativ beeinflußt werden.

Die Folien können beispielsweise durch einen mehrstufigen Streckprozeß auch mit hohen Verstreckgraden in einer bevorzugten oder in beiden Flächenrichtungen der Folie, z.B. zur Herstellung von Folien mit sehr hohen mechanischen Eigenschaften, hergestellt werden. Hierbei sind auch Streckprozesse mit der Folge längs-quer, querlängs, längs-quer-längs, simultan (längs-quer), und eine Mehrfachstreckung in einer oder beiden Richtungen möglich.

Überraschend hat sich herausgestellt, daß die erfindungsgemäßen Folien eine sehr hohe Spannungsfestigkeit aufweisen und ohne Probleme hergestellt werden können. Ölgetränkte Kondensatoren, die derartige Folien enthalten zeigen eine hohe zeitliche Konstanz der Spannungsfestigkeit was auf den geringen Anteil an migrierfähigen Substanzen in der Folie zurückgeführt wird.

Die Erfindung wird nun anhand von Beispielen näher erläutert. Zur Charakterisierung der Rohstoffe und der Folien wurden die folgenden Meßmethoden benutzt:

**SV-Wert**

Zur Bestimmung des SV-Wertes wird eine Polyester-Probe in einem Lösungsmittel (Dichloressigsäure) gelöst. Die Viskosität dieser Lösung sowie die Viskosität des reinen Lösungsmittels werden in einem Ubbelohde-Viskosimeter gemessen. Aus den beiden Werten wird der Quotient ermittelt und davon 1,000 abgezogen und dieser Wert mit 1000 multipliziert. Der resultierende Wert ist der SV-Wert (spezifische Viskosität).

**Rauhigkeit**

Die Rauhigkeit ($R_a$, $R_z$) der Folie wurde nach DIN 4768 bei einem Cut-off von 0,25 mm bestimmt.

**Elektrische Durchschlagsfestigkeit**

Die elektrische Durchschlagsfestigkeit für die AC und für die DC wurde nach DIN 53 481 gemessen. Zur Festlegung eines Wertes wurden 20 Einzelmessungen durchgeführt, wobei das Meßklima 23 °C und 80 % relative Feuchte war. Die Elektrodenanordnung bestand aus Kugel-Platte.

**Elektrische Leitfähigkeit**

Die elektrische Leitfähigkeit (EL) wäßriger Aufschlämmungen von Partikeln wurde in Anlehnung an DIN ISO 787 Teil 14 „Allgemeine Prüfverfahren für Pigmente und Füllstoffe" durchgeführt. Die Messungen wurden mit der Tauchzelle und dem Anzeigegerät der Fa. Tacussel durchgeführt. Die Meßfrequenz betrug 1 kHz. Die Klimabedingungen waren 23 °C und 50 % Luftfeuchte. Die Probenaufbereitung erfolgte mit 10 g Partikel in einem 250 ml Becherglas. Das Partikel wurde dabei mit ca. 80 ml kaltem Wasser aufgeschlämmt, unter Rühren zum Kochen gebracht (Kochzeit 5 min), auf ca. 60 °C abgekühlt und mit kaltem Wasser zu 100 g aufgefüllt. Danach wurde der Ansatz nochmals umgerührt.

**Migrierbarer Anteil in Folie**

Der migrierbare Anteil einer Folie ist ein Maß für die Sauberkeit des eingesetzten Rohstoffes. Je größer dieser Wert, umso geringer ist die Sauberkeit des Rohstoffes. Im vorliegenden Fall wird hiermit insbesondere der Anteil an migrierfähigen Stoffen berücksichtigt, der sich durch das eingesetzte Partikel ergibt. Der migrierbare Anteil wird für ein konstantes Volumen Polyesterfolie in einem elektrischen Bauteil ermittelt. Das Bauteilvolumen beträgt 100 cm$^3$, was einer Folienmasse von ca. 140 g entspricht.

Der migrierbare Anteil (MA) in diesem Volumenelement ist damit proportional der elektrischen Leitfähigkeit des eingesetzten Partikels (EL) und der Partikelkonzentration (PK). Der migrierbare Anteil (MA) wird wie folgt berechnet

$$MA[\mu S/cm] = EL[\mu S/cm] * PK[-]*140/10$$

Der Faktor 140/10 berücksichtigt die Polyesterfolienmasse im Volumenelement (140 g) und die Masse der Partikel bei der Messung der elektrischen Leitfähigkeit (10 g).

In den folgenden Beispielen wurden die Partikel nach Beendigung der Umesterung zugegeben und anschließend die Polykondensation nach der für Polyester üblichen Weise durchgeführt, so daß das Polymer einen SV-Wert von 810 aufweist. Gefällte Kieselsäure ($^®$Sylobloc 44, Fa. Grace) wurde in Wasser aufgeschlämmt, auf ca. 60 bis 80 °C erhitzt und 1 Stunde gerührt. Dieser Prozeß wurde nach abdekantieren des Wassers wiederholt, bis die Leitfähigkeit <100 $\mu$S/cm lag.

**Beispiel 1**

Es wurden 17 000 ppm eines $SiO_2$-Partikels (Sylobloc 44, Fa. Grace, gereinigt wie oben beschrieben) mit einem mittleren Teilchendurchmesser von ca. 3,3 $\mu$m und einer elektrischen Leitfähigkeit von 50 $\mu$S/cm in den Polyesterrohstoff eingearbeitet.

Die erhaltenen Polyesterchips wurden bei 160 °C auf eine Restfeuchte von 50 ppm getrocknet und über die Prozeßschritte Extrusion, Ausformung der Schmelze in einer Breitschlitzdüse zu einem flachen Schmelzefilm, Abkühlung dieses Schmelzefilms auf einer Abzugswalze zu einer unorientierten Folie, Längsstreckung, Querstreckung und Aufrollung zu einer 12 μm dicken biaxial orientierten Folie verarbeitet. Die Bedingungen in den einzelnen Verarbeitungsschritten waren dabei wie folgt:

| Extrusion: | Temperatur: | 300 °C |
|---|---|---|
| Längsstrekkung: | Temperatur: | 85 - 135 °C |
| | Längsstreckverhältnis: | 3,8 |
| Querstreckung: | Temperatur: | 85 - 145 °C |
| | Querstreckverhältnis: | 4,0 |
| Fixierung: | Temperatur: | 230 °C |

Die Eigenschaften dieser Folie sind in der nachfolgenden Tabelle dargestellt.

**Beispiel 2**

Im Vergleich zu Beispiel 1 wurde lediglich die Foliendicke auf 19 μm erhöht.

**Vergleichsbeispiel 1**

Im Vergleich zu Beispiel 1 wurde ein Kaolin mit einem mittleren Partikeldurchmesser von ca. 1,5 μm und einer elektrischen Leitfähigkeit von 294 μS/cm verwendet. Der Partikelgehalt betrug 2 000 ppm. Die Folie weist zu geringe Rauhigkeitswerte auf, so daß eine gute Ölimprägnierbarkeit der Folie nicht mehr gegeben ist.

**Vergleichsbeispiel 2**

Im Vergleich zu Vergleichsbeispiel 1 wurde jetzt die Foliendicke auf 19 μm angehoben. Der Partikelgehalt betrug 2 000 ppm. Auch in diesem Fall sind die Rauhigkeitswerte für eine gute Ölimprägnierbarkeit der Folie zu gering.

**Vergleichsbeispiel 3**

Im Vergleich zu Vergleichsbeispiel 2 wurde die Partikelkonzentration auf 17 000 ppm angehoben. Die Folie hat die für die Ölimprägnierung geforderten Rauhigkeitswerte, der migrierende Anteil ist jedoch zu hoch.

**Vergleichsbeispiel 4**

Es wurden jetzt Partikel aus Calciumcarbonat (Hydrocarb 70) verwendet. Der Partikeldurchmesser betrug 1,8 μm und die elektrische Leitfähigkeit des Partikels betrug 150 μS/cm. Die Partikel wurden dem Polyesterrohstoff in einer Konzentration von 5 000 ppm beigegeben. Es wurde eine 6 μm dicke Folie mit den in Beispiel 1 angegebenen Verfahrensbedingungen hergestellt. Die erzielten Rauhigkeitswerte genügten nicht den gestellten Anforderungen. Bei weiterer Anhebung der Partikelkonzentration ist eine Imprägnierbarkeit gegeben, jedoch ist dann der migrierende Anteil zu hoch.

**Vergleichsbeispiel 5**

Im Vergleich zu den Vergleichsbeispielen 1 bis 4 wurde jetzt ein sehr sauberes aber feinkörniges Partikel (Aerosil TT 600, elektrische Leitfähigkeit 20 μS/cm, Sekundäragglomeratgröße 0,3 - 0,6 μm) in einer Konzentration von 5 000 ppm verwendet. Die erzielten Rauhigkeitswerte genügen bei weitem nicht den gestellten Anforderungen. Eine Ölimprägnierbarkeit der Folie ist nicht mehr gegeben.

Tabelle

| Beispiel | Folien-dicke | Partikel-gehalt | Leitfähigkeit der Partikel | migrierbarer Anteil, auf 100 cm$^3$ PET bezogen | Rauhigkeit $R_z$ | Rauhigkeit $R_a$ | Durchschlagsfe-stigkeit DC/AC |
|---|---|---|---|---|---|---|---|
| | µm | ppm | µS/cm | µS/cm | µm | µm | V/mm |
| B 1 | 12 | 17 000 | 50 | 11,9 | 1,81 | 0,32 | 280/570 |
| B 2 | 19 | 17 000 | 50 | 11,9 | 1,85 | 0,33 | 270/620 |
| VB 1 | 12 | 2 000 | 294 | 8,3 | 0,3 | 0,05 | 300/620 |
| VB 2 | 19 | 2 000 | 294 | 8,3 | 0,3 | 0,05 | 280/630 |
| VB 3 | 12 | 17 000 | 294 | 70 | 1,95 | 0,31 | 200/400 |
| VB 4 | 6 | 5 000 | 150 | 10,5 | 0,62 | 0,05 | 340/- |
| VB 5 | 6 | 5 000 | 20 | 1,4 | 0,3 | 0,03 | 300/- |

- nicht bestimmt

**Patentansprüche**

1. Biaxial orientierte Polyesterfolie, welche Partikel enthält und

7

- deren Rauhigkeitswert $R_z$ auf wenigstens einer Folienoberfläche größer als 1,0 $\mu$m ($R_a$ größer als 0,1 $\mu$m) ist
- deren Durchschlagsfestigkeit AC größer als 220 kV/mm (DC größer als 500 kV/mm) ist und
- wobei der migrierende Anteil, bezogen auf die Masse der zugegebenen Partikel auf ein Polyester-Volumen von 100 cm$^3$, kleiner als 18 $\mu$S/cm ist.

2. Biaxial orientierte Polyesterfolie nach Anspruch 1, dadurch gekennzeichnet, daß der Rauhigkeitswert $R_z$ größer als 1,2 $\mu$m ($R_a$ größer als 0,12 $\mu$m) ist.

3. Orientierte Folie nach Anspruch 1 oder 2, dadurch gekennzeichnet, daß die Durchschlagsfestigkeit AC größer als 230 kV/mm (DC größer als 530 kV/mm) ist.

4. Orientierte Folie nach einem oder mehreren der Ansprüche 1 bis 3, dadurch gekennzeichnet, daß der migrierende Anteil kleiner als 16 $\mu$S/cm ist.

5. Orientierte Folie nach einem oder mehreren der Ansprüche 1 bis 4, dadurch gekennzeichnet, daß die Partikel einen mittleren Teilchendurchmesser von größer als 1,5 $\mu$m haben.

6. Orientierte Folie nach einem oder mehreren der Ansprüche 1 bis 5, dadurch gekennzeichnet, daß die Folie Partikel in einer Menge von mehr als 5 000 ppm enthält.

7. Biaxial orientierte Polyesterfolie nach einem oder mehreren der Ansprüche 1 bis 6, dadurch gekennzeichnet, daß die Partikel anorganische und/oder organische Partikel sind.

8. Biaxial orientierte Polyesterfolie nach einem oder mehreren der Ansprüche 1 bis 7, dadurch gekennzeichnet, daß die Gesamtfoliendicke mindestens 2,5 $\mu$m beträgt.

9. Polyesterrohstoff im wesentlichen bestehend aus einem oder mehreren verschiedenen Polyester, Partikeln und gegebenenfalls Additiven, dadurch gekennzeichnet, daß es sich bei den Partikeln überwiegend um solche mit einer Leitfähigkeit von kleiner als 100 $\mu$S/cm und einem mittleren Teilchendurchmesser von größer als 1,5 $\mu$m handelt.

10. Polyesterrohstoff nach Anspruch 9, dadurch gekennzeichnet, daß als Partikel Siliziumdioxidpartikel und/oder Partikel aus amorpher und/oder pyrogener Kieselsäure und/oder Kaolinpartikel und/oder Aluminiumoxidpartikel und/oder Kalziumcarbonatpartikel aus natürlichem oder gefälltem Kalziumcarbonat und/oder Silikonpartikel und/oder vernetzte Polystyrolpartikel und/oder vernetzte Epoxidharzpartikel und/oder vernetzte Acrylatpartikel und/oder Mischungen aus zwei oder mehreren dieser Partikel eingesetzt werden.

11. Folienrohstoff nach Anspruch 10, dadurch gekennzeichnet, daß die Partikel sekundär agglomeriert sind.

12. Folienrohstoff nach Anspruch 10 oder 11, dadurch gekennzeichnet, daß der Polyester ausgewählt wird aus der Gruppe PET, PBT, PEN, PCT, PENBB und Blends dieser Polyester.

13. Verwendung einer Folie nach einem oder mehreren der Ansprüche 1 bis 8 als Kondensatorfolie.